# FASCICULE DE BREVET EUROPEEN

(11) **EP 0 962 314 B1**
(45) Date de publication et mention de la délivrance du brevet: **12.02.2003**
(21) Numéro de dépôt: 98440113.3
(22) Date de dépôt: 27.05.1998
(51) Int. Cl.: B32B 27/32, B32B 5/00, A01G 9/14

(54) **Film plastique diffusant et isotherme destiné à la réalisation de couvertures de serres ou d'écrans solaire**
Streuende und isothermische Kunststoffolie zur Herstellung von Abdeckungen für Gewächshäuser oder von Sonnenschutzsystemen
Diffusing and isothermal plastic film for making coverings for greenhouses or sun shading systems

(43) Date de publication de la demande: 08.12.1999
(73) Titulaire: Prosyn Polyane S.A., 42408 Saint-Chamond Cedex (FR)
(72) Inventeur: Plantier, Guy, 42100 Saint-Ettienne (FR); Soubeyrand, René, 42400 Saint-Chamond (FR)
(74) Mandataire: Arbousse-Bastide, Jean-Claude Philippe

(56) Documents cités:
- WO-A-95/28828
- WO-A-97/20887
- DE-A- 3 305 327
- GB-A- 1 593 920
- GB-A- 2 110 215
- GB-A- 2 314 844
- GB-A- 2 324 532
- DATABASE WPI Section Ch, Week 8827 Derwent Publications Ltd., London, GB; Class A17, AN 88-187987 XP002085077 & JP 63 126739 A (NIPPON STYRENE PAPER KK) , 30 mai 1988
- DATABASE WPI Section Ch, Week 8508 Derwent Publications Ltd., London, GB; Class A14, AN 85-046032 XP002085078 & JP 59 111838 A (MITSUI POYCHEMICAL) , 28 juin 1984

## Description

La présente invention a pour objet un film plastique destiné à la réalisation de couvertures de serres ou d'écrans solaires.

Les films plastiques tendent de plus en plus largement à remplacer les vitres traditionnellement utilisées dans la fabrication des serres, en raison essentiellement de la fragilité et du coût élevé de ces dernières, qui sont généralement réservées à la construction de serres-chapelles, de très grandes dimensions et notamment de très grande hauteur.

Les films de polyéthylène utilisés pour réaliser les premières serres-tunnels présentent l'inconvénient de devoir être le plus souvent blanchis à la chaux avant l'été en vue d'éviter des surchauffes préjudiciables aux plantes, et de devoir être débarrassées de leur enduit de chaux en automne, ce qui entraîne des coûts de main d'oeuvre importants.

Les films plastiques mis en oeuvre pour réaliser des couvertures de serres doivent répondre à deux impératifs essentiels, a savoir :
- permettre une rétention suffisante, supérieure à 75%, de la chaleur nocturne transmise du sol par les rayons infra-rouges longs ;
- empêcher une élévation exagérée de la température diurne dans le milieu protégé en absorbant les rayons infra-rouges courts de la lumière solaire.

Les films plastiques utilisés à ce jour sont généralement des films translucides obtenus par extrusion de polyoléfines pouvant renfermer une charge telle que le kaolin, le talc ou un silicoaluminate, qui permet de diffuser les rayons solaires en limitant les surchauffes à l'intérieur de l'espace protégé.

Toutefois ces films présentent l'inconvénient d'une transparence insuffisante qui peut nuire à la photosynthèse.

On a également proposé l'utilisation de films-mousses, obtenus par incorporation au polymère de base d'un mélange d'additifs qui, pendant la phase d'extrusion, génère un dégagement gazeux de gaz carbonique et d'azote qui se répartit dans la masse. Ces films, de structure microporeuse, offrent l'avantage d'une meilleure diffusion de la lumière solaire mais leur transparence est également très réduite. Ils présentent en outre l'inconvénient d'être peu résistants et de se souiller très vite, leur structure microporeuse retenant toutes les poussières de l'atmosphère ainsi que les pesticides et autres produits de traitements agricoles.

Les documents GB-A-2 314 844 et GB-A-2 324 532 décrivent chacun un film plastique diffusant et isotherme destiné à la réalisation de couvertures de serres comportant une couche médiane renfermant des bulles (de 50 µm à 500 µm) et deux couches externes.

Le document JP-A-5 91 11 838 décrit un film plastique diffusant et isotherme destiné à la réalisation de couvertures de serres comportant une couche médiane de polyoléfine écumée et deux couches de copolymère de polyoléfine.

Le document JP-A-6 31 26 739 décrit un film plastique diffusant et isotherme destiné à la réalisation de couverturs de serres comportant deux couches de polypropylène et une couche médiane de polypropylène écumé.

Le document GB-A- 2 110 215 décrit un film plastique comportant une couche cellulaire de polyoléfine, par exemple du polyéthylène ou un copolymère éthylène-acétate de vinyle et deux couches externes d'un copolymère de polypropylène. L'utilisation différente du film selon l'invention ne délimite pas l'étendue de la protection par rapport à l'état de la technique.

Toutefois, les films décirts dans ces documents ne permettent pas d'obtenir de bons résultats culturaux du fait de la température trop élevée dans le milieu protégé sous fort ensoleillement. l'avantage d'une meilleure diffusion de la lumière solaire mais leur transparence est également très réduite. Ils présentent en outre l'inconvénient d'être peu résistants et de se souiller très vite, leur structure microporeuse retenant toutes les poussières de l'atmosphère ainsi que les pesticides et autres produits de traitements agricoles.

La présente invention a pour but de remédier à ces divers inconvénients en proposant un film plastique qui allie à la transparence et à une bonne qualité de diffusion lumineuse l'avantage d'une excellente résistance mécanique et d'une surface autolavable par l'eau de pluie.

Le film plastique selon l'invention se caractérise essentiellement en ce qu'il est constitué de trois couches de polyoléfines, à savoir deux couches externes lisses et une couche médiane renfermant des bulles.

Les trois couches du film plastique selon l'invention sont préférentiellement réalisées chacune en un copolymère éthylène-acétate de vinyle, mais elles peuvent l'être en toute autre polyoléfine adaptée à cet usage.

Au moins une couche du film plastique selon l'invention renferme avantageusement au moins un additif tel qu'un oxyde métallique, par exemple un oxyde de titane ou de zinc, destiné à arrêter les rayons UV courts, qui peuvent avoir sur les plantes un effet préjudiciable, pouvant être cause de maladies ou de brûlures. L'oxyde métallique est mis en oeuvre à raison de 0,3 à 1,5 %.

La couche médiane du film selon l'invention est réalisée par adjonction au polymère qui la constitue, avant passage dans l'extrudeuse, d'au moins un additif donnant lieu, pendant l'extrusion, à un dégagement gazeux entraînant la formation de bulles dans ladite couche.

L'additif mis en oeuvre peut être un carbonate alcalin ou tout autre produit ayant un effet similaire, et il est mis en oeuvre dans des proportions variables, en fonction du résultat souhaité. Toutefois il est le plus souvent mis en oeuvre à raison de 1 à 3 % en poids par rapport au poids de polymère.

Les bulles contenues dans la couche médiane du film selon l'invention présentent avantageusement une longueur de 1 à 3 mm et elles peuvent être rondes ou allongées. Ces bulles ont pour effet de diffuser la lumière solaire par un phénomène de réfraction multiple, sans réduire sensiblement la transparence du film.

Afin d'obtenir les meilleurs résultats, il est souhaitable que les bulles soient présentes en proportion importante dans le film, et de préférence à raison d'au moins 50 % de sa surface.

Le film selon l'invention peut être obtenu, selon une technique connue en soi, par coextrusion, à une température appropriée adaptée aux polymères mis en oeuvre, des trois couches qui le constituent, à partir de granulés de polymères du commerce auxquels on mélange le ou les additifs choisis.

Le film selon l'invention présente toutes les propriétés requises pour la couverture de serres, assurant à la fois une absorption suffisante des rayons UV courts et IR courts provenant de la lumière solaire et la rétention nocturne des rayons IR longs provenant du sol, ce qui lui donne des qualités isothermiques.

Le film selon l'invention offre pour cette raison un triple avantage d'une bonne transparence à la. lumière, il laisse passer plus de 78 % des rayons du spectre visible, d'un effet rafraîchissant le jour, en cas de forte chaleur, et d'une rétention thermique la nuit, permettant ainsi le développement des plantes dans les meilleures conditions.

## Revendications

1. Film plastique destiné à la réalisation de couvertures de serres ou d'écrans solaires, **caractérisé en ce qu'**il est constitué de trois couches de polymères du type polyoléfines, à savoir deux couches externes lisses et une couche médiane renfermant des bulles rondes ou allongées ayant une longueur de 1 à 3 mm et **en ce que** d'une part la couche médiane est obtenue par adjonction au polymère qui la constitue, avant passage dans l'extrudeuse, d'au moins un additif donnant lieu, pendant l'extrusion, à un dégagement gazeux, ledit additif étant un carbonate alcalin et étant mis en oeuvre à raison de 1 à 3 % en poids par rapport au poids de polymère et en ce d'autre part au moins l'une des couches renferme au moins un additif du type oxyde métallique.

2. Film plastique selon la revendication 1, **caractérisé en ce que** le polymère mis en oeuvre est une polyoléfine telle que le polyéthylène ou un copolymère éthylène-acétate de vinyle.

3. Film plastique selon la revendication 1 ou 2, **caractérisé en ce que** l'oxyde métallique est un oxyde de titane ou de zinc.

4. Film plastique selon l'une quelconque des revendications précédentes, **caractérisé en ce que** que l'oxyde métallique est mis en oeuvre à raison de 0,3 à 1,5 %.

## Patentansprüche

1. Plastikfolie, dazu bestimmt, zur Realisierung von Abdeckungen für Gewächshäuser oder von Sonnenschutzabdeckungen eingesetzt zu werden, **dadurch gekennzeichnet, daß** sie sich aus drei Polymerschichten, Typ Polyolefin zusammensetzt, davon zwei äußere glatte Schichten und eine runde oder längliche Luftblasen mit einer Länge von 1 bis 3 mm enthaltende Mittelschicht, und **dadurch gekennzeichnet, daß** einerseits die Mittelschicht durch Hinzufügung von mindestens einem Zusatzstoff zu dem diese Schicht bildenden Polymer vor Durchlaufen des Extruders gebildet wird, wobei dieser Zusatzstoff während der Extrusion Anlaß zu einer Gasfreisetzung gibt, wobei es sich bei diesem Zusatzstoff um ein alkalisches Karbonat handelt, welches in einem Verhältnis von 1 bis 3 Gewichtsprozent zum Polymergewicht eingesetzt wird, und andererseits **dadurch gekennzeichnet, daß** mindestens eine der Schichten mindestens einen Zusatzstoff vom Typ Metalloxid beinhaltet.

2. Plastikfolie gemäß Anspruch 1, **dadurch gekennzeichnet, daß** es sich bei dem verarbeiteten Polymer um ein Polyolefin vom Typ Polyethylen oder um ein Vinyl-Ethylenacetat Copolymer handelt.

3. Plastikfolie gemäß einem der Ansprüche 1 oder 2, **dadurch gekennzeichnet, daß** es sich bei dem Metalloxid um ein Titan- oder ein Zinkoxid handelt.

4. Plastikfolie gemäß einem beliebigen der obigen Ansprüche, **dadurch gekennzeichnet, daß** das Metalloxid in einem Verhältnis von 0,3 bis 1,5 Prozent eingesetzt wird.

## Claims

1. Plastic film designed to make covers for greenhouses or sun screens, **characterised by** the fact that it is made up of three layers of polyolefin type polymers, that is two smooth outer layers and one core layer with 1 to 3-mm long round or elongated bubbles and further **characterised by** the fact that the core layer is obtained by adding to the polymer, prior to extrusion, at least one additive that gives rise to the discharge of gas during extrusion, the said additive being an alkaline carbonate and being used in a ratio of 1 to 3% of the weight of the polymer, and by the fact that at least one of the layers includes at lease one additive of the metallic oxide type.

2. Plastic film as described in claim 1, **characterised by** the fact that polymer used is a polyolefin such as polyethylene or an ethylene-vinyl acetate copolymer.

3. Plastic film as described in claim 1 or 2, **characterised by** the fact that metallic oxide is titanium or zinc oxide.

4. Plastic film as described in any of the previous claims, **characterised by** the fact that metallic oxide is used in a ratio of 0.3 to 1.5%.
